# EUROPEAN PATENT APPLICATION

(11) **EP 4 349 673 A1**
(43) Date of publication of application: **10.04.2024**
(21) Application number: 21947621.5
(22) Date of filing: 30.06.2021
(51) Int. Cl.: B60T 13/74, B60T 13/66

(54) **BRAKING SYSTEM AND METHOD FOR CONTROLLING BRAKING SYSTEM**

(71) Applicant: Huawei Technologies Co., Ltd., Longgang Shenzhen, Guangdong 518129 (CN)
(72) Inventor: YANG, Weimiao, Shenzhen, Guangdong 518129 (CN); LV, Shangwei, Shenzhen, Guangdong 518129 (CN); LIU, Donghao, Shenzhen, Guangdong 518129 (CN); ZHANG, Yongsheng, Shenzhen, Guangdong 518129 (CN)
(74) Representative: Isarpatent
(86) International application number: PCT/CN2021/103896
(87) International publication number: WO 2023/272668

(57) **Abstract**

A braking system and a method for controlling the braking system are provided. The braking system includes a main braking subsystem (110) and a redundant braking subsystem (120), where the main braking subsystem (110) includes a brake master cylinder (119), and the redundant braking subsystem (120) includes a redundant boosting apparatus (122) and a third isolation valve (123). The redundant boosting apparatus (122) includes a first input end (33) and a first output end (34). The first input end (33) is configured to input a brake fluid, and the first output end (34) of the redundant boosting apparatus (122) is hydraulically connected to the brake master cylinder (119). One end of the third isolation valve (123) is hydraulically connected to the first input end (33) of the redundant boosting apparatus (122), and another end of the third isolation valve (123) is hydraulically connected to the brake master cylinder (119). According to the redundant braking subsystem, redundancy performance of the braking system can be improved, and the redundant braking subsystem is simple in structure, is easy to control, and has low costs.

## Description

### TECHNICAL FIELD

This application relates to the field of vehicles, and more specifically, to a braking system and a method for controlling the braking system.

### BACKGROUND

A braking system of a vehicle is a system that applies specific braking force to wheels of the vehicle to perform forced braking on the vehicle to some extent. A function of the braking system is to enable a traveling vehicle to forcibly decelerate or even stop as required by a driver or a controller, to enable a stopped vehicle to stably park under various road conditions (for example, on a ramp), or to enable a vehicle running downhill to keep a speed stable. With the development of electrification and intelligentization of vehicles, a requirement for the braking system of the vehicle is increasingly high. For example, with improvement of an autonomous driving level, dependence of an operation of the braking system on the driver needs to be reduced. As a result, a requirement for redundancy performance of the braking system is increasingly high. Even if one or more components of the braking system fail, the vehicle still has a braking function.

An electro-hydraulic brake (Electro-Hydraulic Brake, EHB) system, as a popular braking system, may include a brake-by-wire mode, an active braking mode, and a manual braking mode. In the brake-by-wire mode, a controller controls a boosting apparatus in a wire control manner to provide braking force for wheels. In the active braking mode, similarly, a controller controls the boosting apparatus to provide braking force for the wheels. A difference from the brake-by-wire mode lies in that, in the active braking mode, a driver does not need to operate a brake pedal. In the manual braking mode, a brake master cylinder provides braking force for the wheels. In the foregoing braking modes of the braking system, when pressure supply apparatuses (the boosting apparatus and the brake master cylinder) on a braking pipeline fail, a redundant braking module needs to be used to provide braking force for the wheels, to improve redundancy performance of the braking system. In the conventional technology, a structure of the redundant braking module is complex, and this increases control difficulty and costs of the braking system.

### SUMMARY

This application provides a braking system. The braking system includes a redundant braking subsystem. The redundant braking subsystem improves redundancy performance of the braking system, and the redundant braking subsystem is simple in structure, is easy to control difficulty, and has low costs.

According to a first aspect, a braking system is provided. The braking system includes a main braking subsystem 110 and a redundant braking subsystem 120, where the main braking subsystem 110 includes a brake master cylinder 119, and the redundant braking subsystem 120 includes a redundant boosting apparatus 122 and a third isolation valve 123. The redundant boosting apparatus 122 includes a first input end 33 and a first output end 34. The first input end 33 is configured to input a brake fluid, and the first output end 34 of the redundant boosting apparatus 122 is hydraulically connected to the brake master cylinder 119. One end of the third isolation valve 123 is hydraulically connected to the first input end 33 of the redundant boosting apparatus 122, and another end of the third isolation valve 123 is hydraulically connected to the brake master cylinder 119.

According to the braking system in this application, after a pressure supply apparatus on a braking pipeline fails, the redundant braking subsystem can provide braking force for wheels, to improve redundancy performance of the braking system. In addition, the redundant braking subsystem is simple in structure, is easy to control and has low costs.

With reference to the first aspect, in some implementations of the first aspect, the redundant boosting apparatus 122 further includes a second input end 35 and a second output end 36, where the second input end 35 is hydraulically connected to one end of a fourth isolation valve 124, another end of the fourth isolation valve 124 is hydraulically connected to the brake master cylinder 119, and the second output end is hydraulically connected to the brake master cylinder 119.

With reference to the first aspect, in some implementations of the first aspect, the redundant boosting apparatus 122 further includes a second input end 35 and a second output end 36, where the second input end 35 is hydraulically connected to the first input end 33, and the second output end 36 is hydraulically connected to the first output end 34.

With reference to the first aspect, in some implementations of the first aspect, the main braking subsystem further includes a fluid reservoir apparatus 118, where the fluid reservoir apparatus 118 is connected to an input end of the redundant boosting apparatus 122, and the input end of the redundant boosting apparatus 122 includes at least one of the first input end 33 and the second input end 35.

With reference to the first aspect, in some implementations of the first aspect, the redundant braking subsystem 120 further includes a first pressure sensor 121, where the first pressure sensor 121 is connected to a pipeline that is between a third isolation valve 123 and the brake master cylinder 119, and the first pressure sensor 121 is configured to sense pressure of a brake fluid that is in the brake master cylinder 119.

With reference to the first aspect, in some implementations of the first aspect, the redundant braking subsystem 120 further includes a first one-way valve 127, where the first one-way valve 127 and the fourth isolation valve 124 are connected in parallel; or the first one-way valve 127 and the third isolation valve 123 are connected in parallel.

With reference to the first aspect, in some implementations of the first aspect, the redundant boosting apparatus 122 is a plunger pump assembly. The plunger pump assembly includes a first hydraulic pump and a second hydraulic pump, where an input end of the first hydraulic pump is the first input end 33, an output end of the first hydraulic pump is the first output end 34, an input end of the second hydraulic pump is the second input end 35, and an output end of the second hydraulic pump is the second output end 36.

With reference to the first aspect, in some implementations of the first aspect, the redundant braking subsystem 120 further includes a first connector (1, 2, 3, 4), where the first connector (1, 2, 3, 4) is configured to be connected to the brake master cylinder 119.

With reference to the first aspect, in some implementations of the first aspect, the redundant braking subsystem 120 further includes a second connector (5, 6), where the second connector (5, 6) is configured to connect the redundant braking subsystem 120 and the fluid reservoir apparatus 118.

With reference to the first aspect, in some implementations of the first aspect, the main braking subsystem further includes a main boosting apparatus 111, a first isolation valve 116, a second isolation valve 117, a target braking pipeline (114, 115), at least one inlet valve (11, 12, 13, 14), and at least one outlet valve (15, 16, 17, 18). The first isolation valve 116 and the second isolation valve 117 are configured to block a brake fluid that is in the target braking pipeline (114, 115). The main boosting apparatus 111 is configured to: increase pressure of the brake fluid that is in the target braking pipeline (114, 115), and provide braking force for at least one brake wheel cylinder (23, 24, 25, 26) by using the at least one inlet valve (11, 12, 13, 14); or reduce braking force that is in at least one brake wheel cylinder (23, 24, 25, 26) by using the at least one outlet valve (15, 16, 17, 18).

With reference to the first aspect, in some implementations of the first aspect, the main braking subsystem further includes a pedal feel simulation system 113. The pedal feel simulation system 113 is configured to collect required braking force, and the pedal feel simulation system 113 includes a pedal feel simulator 106, a control valve 105, and a second pressure sensor 104. The pedal feel simulator 106 is connected to the target braking pipeline, the control valve 105 is disposed on a pipeline that is between a pressure inlet port of the pedal feel simulator 106 and the target braking pipeline, and the control valve 105 is configured to control connection and disconnection of the pedal feel simulator 106. The second pressure sensor 104 is connected to the pipeline that is between the pressure inlet port of the pedal feel simulator 106 and the target braking pipeline 115, and the second pressure sensor 104 is configured to sense the pressure of the brake fluid that is in the brake master cylinder 119.

According to a second aspect, a hydraulic apparatus is provided. The hydraulic apparatus includes a redundant boosting apparatus 122, a third isolation valve 123, and a first connection interface (1, 2, 3, 4). The redundant boosting apparatus 122 includes a first input end 33 and a first output end 34, where the first input end 33 is configured to input a brake fluid, and the first output end 34 is hydraulically connected to a first interface that is in the first connection interface (1, 2, 3, 4), and the first interface is at least one of the first connection interfaces (1, 2, 3, 4). One end of the third isolation valve 123 is hydraulically connected to the first input end 33 of the redundant boosting apparatus 122, another end of the third isolation valve 123 is hydraulically connected to a second interface that is in the first connection interface (1, 2, 3, 4), and the first connection interface (1, 2, 3, 4) is configured to hydraulically connect the hydraulic apparatus and a brake master cylinder.

With reference to the second aspect, in some implementations of the second aspect, the hydraulic apparatus further includes: a second input end 35 and a second output end 36, where the second output end of the redundant boosting apparatus 122 is hydraulically connected to a third interface that is in the first connection interface (1, 2, 3, 4), and the third interface is at least one of the connectors (1, 2, 3, 4); and a fourth isolation valve 124, where one end of the fourth isolation valve 124 is hydraulically connected to the second input end 35 of the redundant boosting apparatus 122, and another end of the fourth isolation valve 124 is hydraulically connected to a fourth interface that is in the first connection interface (1, 2, 3, 4).

With reference to the second aspect, in some implementations of the second aspect, the hydraulic apparatus further includes: a second input end 35 and a second output end 36, where the second input end 35 of the redundant boosting apparatus 122 is hydraulically connected to the first input end 33, and the second output end 36 is hydraulically connected to the first output end 34.

With reference to the second aspect, in some implementations of the second aspect, the hydraulic apparatus further includes: a fluid reservoir apparatus 118, where the fluid reservoir apparatus 118 is connected to an input end of the redundant boosting apparatus 122, and the input end of the redundant boosting apparatus 122 includes at least one of the first input end 33 and the second input end 35.

With reference to the second aspect, in some implementations of the second aspect, the hydraulic apparatus further includes: a second connection interface (5, 6), where the second connection interface (5, 6) is configured to connect an input end of the redundant boosting apparatus 122 and a fluid reservoir apparatus 118, and the input end of the redundant boosting apparatus 122 includes at least one of the first input end 33 and the second input end 35.

With reference to the second aspect, in some implementations of the second aspect, the hydraulic apparatus further includes: a first pressure sensor 121, where the first pressure sensor 121 is connected to a pipeline that is between the third isolation valve 123 and the second interface, and the first pressure sensor 121 is configured to sense pressure of a brake fluid that is in the brake master cylinder 119.

With reference to the second aspect, in some implementations of the second aspect, the hydraulic apparatus further includes: a first one-way valve 127, where the first one-way valve 127 and the fourth isolation valve 124 are connected in parallel; or the first one-way valve 127 and the third isolation valve 123 are connected in parallel.

With reference to the second aspect, in some implementations of the second aspect, the redundant boosting apparatus 122 is a plunger pump assembly. The plunger pump assembly includes a first hydraulic pump and a second hydraulic pump, where an input end of the first hydraulic pump is the first input end 33, an output end of the first hydraulic pump is the first output end 34, an input end of the second hydraulic pump is the second input end 35, and an output end of the second hydraulic pump is the second output end 36.

According to a third aspect, a method for controlling a braking system is provided. The braking system includes a main braking subsystem 110 and a redundant braking subsystem 120, where the main braking subsystem 110 includes a brake master cylinder 119, and the redundant braking subsystem 120 includes a redundant boosting apparatus 122 and a third isolation valve 123. The redundant boosting apparatus 122 includes a first input end 33 and a first output end 34. The first input end 33 is configured to input a brake fluid to enable the redundant boosting apparatus 122 to output hydraulic pressure, and the first output end 34 of the redundant boosting apparatus 122 is hydraulically connected to the brake master cylinder 119. One end of the third isolation valve 123 is hydraulically connected to the first input end 33 of the redundant boosting apparatus 122, and another end of the third isolation valve 123 is hydraulically connected to the brake master cylinder 119. The method includes: a redundant controller controls the third isolation valve to be turned off; and the redundant controller controls the redundant boosting apparatus 122 to provide hydraulic pressure for a brake wheel cylinder (23, 24, 25, 26) by using the first output end 34.

With reference to the second aspect, in some implementations of the second aspect, the redundant boosting apparatus 122 further includes a second input end 35 and a second output end 36, where the second input end 35 is hydraulically connected to one end of a fourth isolation valve 124, another end of the fourth isolation valve 124 is hydraulically connected to the brake master cylinder 119, and the second output end is hydraulically connected to the brake master cylinder 119. The method further includes: the redundant controller controls the fourth isolation valve to be turned off; and the redundant controller controls the redundant boosting apparatus 122 to provide hydraulic pressure for the brake wheel cylinder (23, 24, 25, 26) by using the first output end 34 and the second output end.

With reference to the second aspect, in some implementations of the second aspect, first information is received, where the first information indicates that a main boosting apparatus is faulty.

According to a fourth aspect, a computer-readable storage medium is provided, and includes a computer program, where when the computer program is run on a computer, the computer is enabled to perform the method according to any one of claims 20 to 22.

### BRIEF DESCRIPTION OF DRAWINGS

FIG. 1 is a schematic diagram of a braking system 100 according to an embodiment of this application;
FIG. 2 is a schematic diagram of another braking system 100 according to an embodiment of this application;
FIG. 3 is a schematic diagram of another braking system 100 according to an embodiment of this application;
FIG. 4 is a schematic diagram of another braking system 100 according to an embodiment of this application;
FIG. 5 is a schematic diagram of another braking system 100 according to an embodiment of this application;
FIG. 6 is a schematic diagram of a flow path of a brake fluid in a braking system according to an embodiment of this application;
FIG. 7 is a schematic diagram of another flow path of a brake fluid in a braking system according to an embodiment of this application;
FIG. 8 is a schematic diagram of another flow path of a brake fluid in a braking system according to an embodiment of this application;
FIG. 9 is a schematic diagram of another flow path of a brake fluid in a braking system according to an embodiment of this application;
FIG. 10 is a schematic diagram of another flow path of a brake fluid in a braking system according to an embodiment of this application; and
FIG. 11 is a schematic flowchart of a method for controlling a braking system according to an embodiment of this application.

### DESCRIPTION OF EMBODIMENTS

The following describes technical solutions in this application with reference to accompanying drawings.

A braking system in this application is applicable to an autonomous vehicle or a new energy vehicle, including a passenger vehicle and a commercial vehicle that have an autonomous driving function, and a passenger vehicle and a commercial vehicle that use new energy.

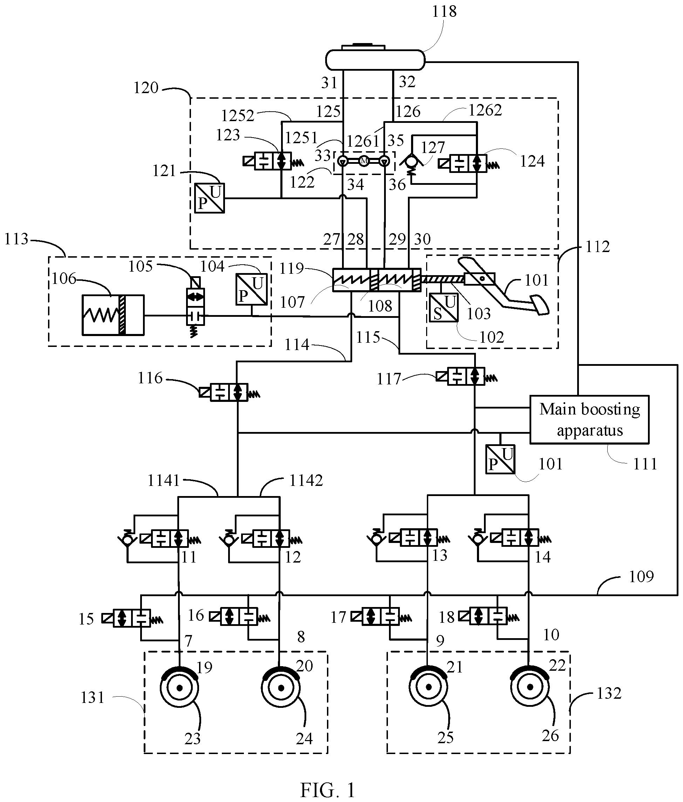

FIG. 1 is a schematic diagram of a braking system 100 according to an embodiment of this application. As shown in FIG. 1, the braking system 100 includes a main braking subsystem and a redundant braking subsystem 120.

The main braking subsystem may include a main boosting apparatus 111, a mechanical braking input apparatus 112, a pedal feel simulation system 113, a first braking pipeline 114, a second braking pipeline 115, a first isolation valve 116, a second isolation valve 117, inlet valves (11, 12, 13, 14), outlet valves (15, 16, 17, 18), a fluid reservoir apparatus 118, and a brake master cylinder 119.

The mechanical braking input apparatus 111 includes a brake pedal 101, a pedal displacement sensor 102, and a push rod 103. When a driver steps on the brake pedal 101, the brake pedal 101 pushes, by using the push rod 103, a piston that is in the brake master cylinder 119 to move, and presses a brake fluid that is in a hydraulic cavity of the brake master cylinder 119 into the first braking pipeline 114 and the second braking pipeline 115. The pedal displacement sensor 102 is configured to detect displacement generated when the brake pedal 101 pushes the piston, or detect relative displacement between the piston and a cylinder body of the brake master cylinder 119.

The pedal feel simulation system 113 includes a pedal feel simulator 106. The pedal feel simulator 106 is connected to the second braking pipeline 115. In this way, a brake fluid in the second braking pipeline 115 may flow into the pedal feel simulator 106, so that the pedal feel simulator 106 determines displacement that is of the piston in the brake master cylinder 119 and that is relative to the brake cylinder body by sensing pressure of the brake fluid that is in the second braking pipeline 115. The pedal feel simulator 106 may also send the detected pressure of the brake fluid to a main controller, so that the controller determines braking force of wheels.

Optionally, a control valve 105 may be further disposed between a pressure inlet port of the pedal feel simulator 106 and the second braking pipeline 115. When the pedal feel simulator 106 does not need to work, the control valve 105 may be controlled to enable the pedal feel simulator 106 to be in an off state, to isolate the second braking pipeline 115 from the pedal feel simulator 106.

Optionally, a pressure sensor 104 may be further disposed between a pressure inlet port of the pedal feel simulator 106 and the second braking pipeline 115. The pressure sensor 104 is configured to detect pressure that is of the brake fluid in the second braking pipeline 115 and that is adjusted by the brake master cylinder 119. The pressure sensor 104 is further configured to send indicated pressure information to the main controller, so that the main controller determines, based on the pressure information, the braking force applied to the wheels of a vehicle.

The main boosting apparatus 111 may be configured to perform pressure boosting on brake fluids of the first braking pipeline 114 and the second braking pipeline 115, to increase the braking force applied to a first group of wheels 131 and a second group of wheels 132 that are of the vehicle.

Specifically, the boosting apparatus 111 may include a motor and a hydraulic cylinder. The motor drives the hydraulic cylinder, and presses a brake fluid that is in the hydraulic cylinder into the first braking pipeline 114 and the second braking pipeline 115, to increase pressure of the brake fluid that is in each braking pipeline.

A pressure outlet port of the main boosting apparatus 111 is separately connected to pressure inlet ports of the first braking pipeline 114 and the second braking pipeline 115. It should be understood that the first braking pipeline 114 includes two pressure outlet ports (7, 8), where the two pressure outlet ports (7, 8) are connected to pressure inlet ports (19, 20) of brake wheel cylinders of the first group of wheels. The second braking pipeline 115 includes two pressure outlet ports (9, 10), where the two pressure outlet ports (9, 10) are connected to pressure inlet ports (21, 22) of brake wheel cylinders of the second group of wheels.

Generally, a first isolation valve 116 is disposed between a pressure outlet port of a first cavity 107 of the brake master cylinder 119 and the boosting apparatus 111, and the first isolation valve 116 may be controlled to be in an on or off state, to control the first cavity 107 to be connected or disconnected to the first braking pipeline 114. Correspondingly, a second isolation valve 117 may also be disposed at a pressure outlet port of a second cavity 108, and the second isolation valve 117 may be controlled to be in an on or off state, to control the second cavity 108 to be connected or disconnected to the second braking pipeline 115.

For the braking system, different braking force needs to be applied to different wheels. Therefore, the inlet valves (11, 12, 13, 14) may be disposed on corresponding braking pipelines that control the braking force of the wheels, to independently manage the braking force applied to each wheel. To be specific, an inlet valve corresponding to a wheel to which the braking force needs to be applied is controlled to be in an on state, and an inlet valve corresponding to another wheel to which the braking force does not need to be applied is controlled to be in an off state. When the inlet valve is in the on state, a brake fluid in each braking pipeline may flow to a brake wheel cylinder of a wheel through a corresponding braking pipeline. When the inlet valve is in the off state, a brake fluid in a braking pipeline cannot flow to a brake wheel cylinder of a wheel through a corresponding braking pipeline.

For example, as shown in FIG. 1, the first braking pipeline 114 may include a first branch 1141 and a second branch 1142, to respectively control braking force of two wheels in the first group of wheels 131. A pressure outlet port of the first branch 1141 is connected to a pressure inlet port 19 of a brake wheel cylinder 23 of the first group of wheels 131, and a pressure outlet port of the second branch 1142 is connected to a pressure inlet port 20 of a brake wheel cylinder 24 of the first group of wheels 131. An inlet valve 11 is disposed between a pressure inlet port of the first branch 1141 and the pressure inlet port 19 of the brake wheel cylinder 19. When the inlet valve 11 is in an on state, braking force applied to the brake wheel cylinder 23 may be increased by increasing pressure of a brake fluid that is in the first branch 1141. An inlet valve 12 is disposed between a pressure inlet port of the second branch 1142 and the pressure inlet port 20 of the brake wheel cylinder 24. When the inlet valve 12 is in an on state, braking force applied to the brake wheel cylinder 24 may be increased by increasing pressure of a brake fluid that is in the second branch 1142.

The foregoing first group of wheels is different from the foregoing second group of wheels. The first group of wheels includes a right front wheel and a left front wheel, and the second group of wheels includes a right rear wheel and a left rear wheel. To be specific, the main braking subsystem 100 is arranged in an H-shaped manner. Alternatively, the first group of wheels includes a right front wheel and a left rear wheel, and the second group of wheels includes a left front wheel and a left rear wheel. To be specific, the braking system 100 is arranged in an X-shaped manner. This is not limited in this application.

To prevent a brake fluid from flowing back, to be specific, the brake fluid flows from the brake wheel cylinder to the boosting apparatus, one-way valves may further be connected in parallel at two ends (a pressure outlet port and a pressure inlet port) of the inlet valves (11, 12, 13, 14).

For the braking system, in some cases, the braking force applied to the wheels needs to be further reduced. Therefore, outlet valves (15, 16, 17, 18) may be disposed on braking pipelines that control the wheels, to independently manage and reduce the braking force applied to each wheel. To be specific, an outlet valve corresponding to a wheel on which the braking force needs to be reduced is controlled to be in an on state, and an outlet valve corresponding to another wheel on which the braking force does not need to be reduced is controlled to be in an off state. When the outlet valve is in the on state, a brake fluid in a braking pipeline may flow to an outlet pipeline 109 through the outlet valve, and flow to a fluid reservoir apparatus 118 through the outlet pipeline 109, to be recycled. When the outlet valve is in the off state, a brake fluid in the outlet pipeline 109 is blocked by the outlet valve and cannot flow to the fluid reservoir apparatus 118.

For example, as shown in FIG. 1, an outlet valve 15 is disposed between a pressure inlet port 7 of the first branch 1141 of the first braking pipeline 114 and the fluid reservoir apparatus 118. When the outlet valve 15 is in the on state, a brake fluid in the first branch 1141 may flow to the outlet pipeline 109 through the outlet valve 13, and finally flow to the fluid reservoir apparatus 118, to reduce braking force of the brake fluid on the brake wheel cylinder 23. When the outlet valve 15 is in the off state, a brake fluid in the first branch 1141 is blocked by the outlet valve 15 and cannot flow to the outlet pipeline 109. An outlet valve 16 is disposed between a pressure inlet port 8 of the second branch 1142 and the fluid reservoir apparatus 118. When the outlet valve 16 is in the on state, a brake fluid in the second branch 1142 may flow to the outlet pipeline 109 through the outlet valve 16, and finally flow to the fluid reservoir apparatus 118, to reduce braking force of the brake fluid on the brake wheel cylinder 24. When the outlet valve 16 is in the off state, a brake fluid in the second branch 1142 is blocked by the outlet valve 16, and cannot flow to the outlet pipeline 109.

It should be understood that, a solution of the outlet valve and a solution of the inlet valve may be separately configured in the braking system for use, or may cooperate with each other in the braking system for use. There may also be a plurality of cooperation manners between the inlet valve and the outlet valve. For example, the first branch 1141 may be further divided into two independent branches that are connected in parallel, and the inlet valve and the outlet valve are respectively disposed on the two independent branches. This is not limited in this application.

Generally, the braking system 100 may implement a mechanical braking mode, a brake-by-wire mode, and an active braking mode by using the main braking subsystem. In the mechanical braking mode, a driver steps on a brake pedal, to provide, by using a brake master cylinder 119, braking force for four brake wheel cylinders (23, 24, 25, 26) via a first braking pipeline 114 and a second braking pipeline 115. In the brake-by-wire mode, a driver steps on a brake pedal, to output required braking force, and a main controller controls, based on the required braking force, a main boosting apparatus 111 to provide braking force for four brake wheel cylinders (23, 24, 25, 26). In the active braking mode, a main controller determines, by analyzing information such as an environment condition, a vehicle status, an ADAS status, and a driver input, that a vehicle needs to perform the active braking mode and determines required braking force, and the main controller controls, based on the required braking force, a main boosting apparatus 111 to provide braking force for four brake wheel cylinders (23, 24, 25, 26).

When the main boosting apparatus in the brake-by-wire mode or the active braking mode fails, braking performance of the braking system 100 can be maintained by a redundant braking subsystem 120.

The redundant braking subsystem 120 may include a first pressure sensor 121, a redundant boosting apparatus 122, a third isolation valve 123, a fourth isolation valve 124, a first redundant braking pipeline 125, a second redundant braking pipeline 126, and a first one-way valve 127.

The first pressure sensor 121 is configured to detect pressure of a brake fluid that is in a first cavity 107 of a brake master cylinder 119. The first pressure sensor 121 is further configured to send indicated pressure information to a redundant controller, so that the redundant controller determines, based on the pressure information, braking force applied to wheels of a vehicle. In a possible design, the first pressure sensor 121 may be connected to a second branch 1252 of the first redundant braking pipeline 125.

The redundant boosting apparatus 122 may be a plunger pump assembly, and the plunger pump assembly may include a motor and at least one hydraulic pump. A specific structure of the plunger pump assembly is not limited in this application. For example, the plunger pump assembly may include a first hydraulic pump and a second hydraulic pump, or the plunger pump assembly may further include four hydraulic pumps. In a structure in which the plunger pump assembly includes the first hydraulic pump and the second hydraulic pump, the first hydraulic pump is connected to a first branch 1251 of the first redundant braking pipeline 125, or a first branch 1251 of the first redundant braking pipeline 125 is connected to a first input end 33 of the redundant boosting apparatus 122. The first input end 33 may be understood as an input end of the first hydraulic pump. The first input end 33 of the redundant boosting apparatus 122 may input a brake fluid that is in a fluid reservoir apparatus 118, so that the redundant boosting apparatus 122 increases pressure of a brake fluid that is in the brake master cylinder 119 by using a first output end 34. The second hydraulic pump is connected to a first branch 1261 of the second redundant braking pipeline 126, or a first branch 1261 of the second redundant braking pipeline 126 is connected to a second input end 35 of the redundant boosting apparatus 122. The second input end 35 may be understood as an input end of the second hydraulic pump. The second input end 33 of the redundant boosting apparatus 122 inputs the brake fluid that is in the fluid reservoir apparatus 118, and a second output end 36 of the redundant boosting apparatus 122 outputs the brake fluid to increase the pressure of the brake fluid that is in the brake master cylinder 119. The motor is configured to drive the first hydraulic pump and the second hydraulic pump, to press the brake fluids in the first redundant braking pipeline 125 and the second redundant braking pipeline 126 into the first braking pipeline 114 and the second braking pipeline 115 by using the brake master cylinder 119, to increase pressure of the brake fluid in each braking pipeline.

Optionally, the third isolation valve 123 is disposed between a pressure inlet port 31 of the first redundant braking pipeline 125 and a pressure inlet port 28 of the brake master cylinder 119. The third isolation valve 123 may be controlled to be in an on or off state, to control a first cavity 107 of the brake master cylinder 119 to be connected or disconnected to the fluid reservoir apparatus 118. The fourth isolation valve 124 is disposed between a pressure inlet port 32 of the second redundant braking pipeline 126 and a pressure inlet port 30 of the brake master cylinder 119. The fourth isolation valve 124 may be controlled in an on or off state, to control a second cavity 108 of the brake master cylinder 119 to be connected or disconnected to the fluid reservoir apparatus 118.

Optionally, the first one-way valve 127 is connected in parallel to two ends (a pressure outlet port and a pressure inlet port) of the fourth isolation valve 124. The first one-way valve 127 may prevent a brake fluid from flowing back, to be specific, the brake fluid flows from the brake master cylinder 119 to the fluid reservoir apparatus 118. When a piston of the master cylinder returns to a right location, if leakage exists between the brake master cylinder (119) and a pedal feel simulator (106), or the fourth isolation valve (124) is stuck, fluid filling cannot be performed on the brake master cylinder (119). In this case, fluid filling may be performed by using the first one-way valve (127), and the first one-way valve (127) may also be an inlet valve of a wheel cylinder.

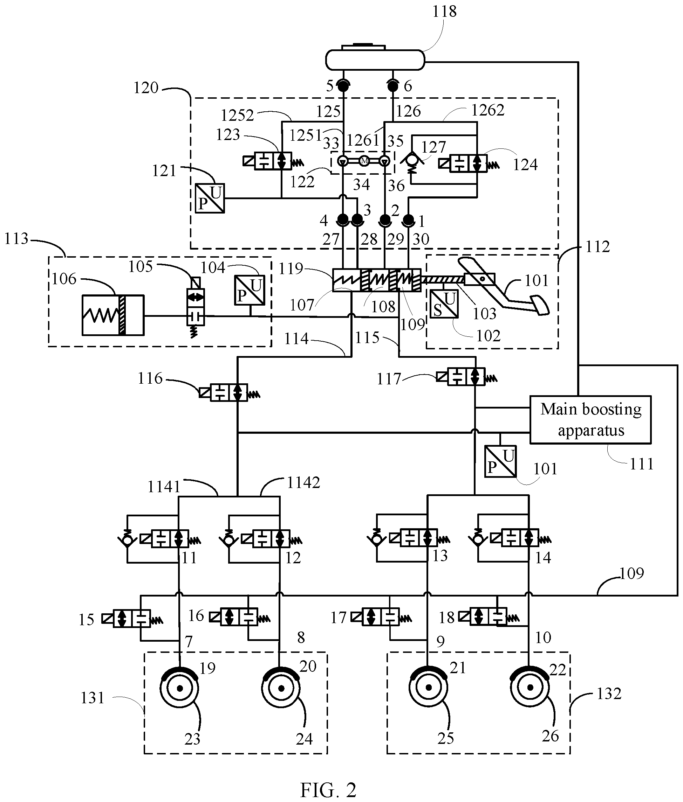

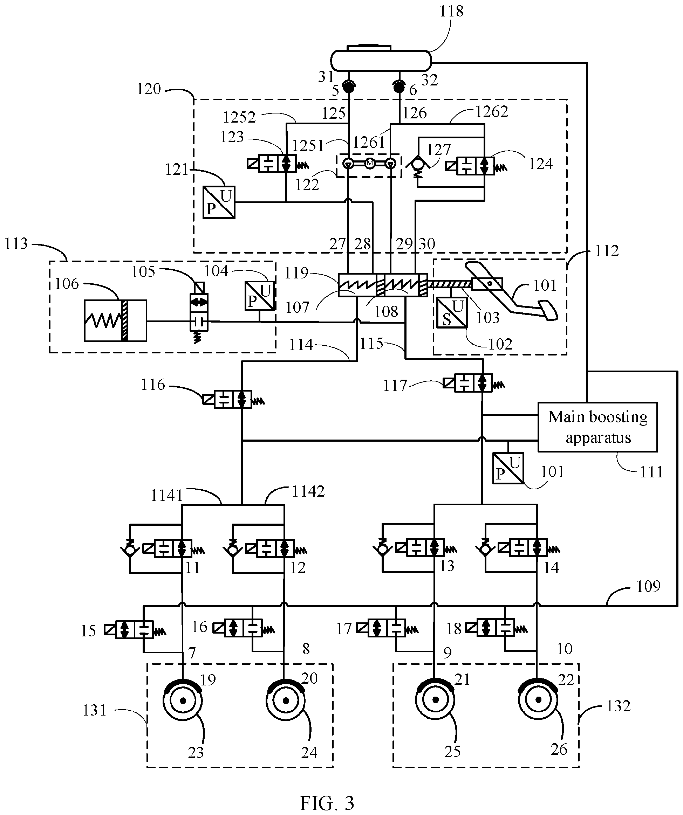

Optionally, the redundant braking subsystem 120 may further include redundant braking subsystem connectors (1, 2, 3, 4, 5, 6). The redundant braking subsystem connectors (1, 2, 3, 4, 5, 6) are configured to connect the redundant braking subsystem 120 and the main braking subsystem. The redundant braking subsystem connectors (1, 2, 3, 4) are respectively disposed at pressure inlet ports (27, 28, 29, 30) of the brake master cylinder 119, or pressure outlet ports of the first branch 1251 and the second branch 1252 that are of the first redundant braking pipeline 125 and pressure outlet ports of the first branch 1261 and the second branch 1262 that are of the second redundant braking pipeline 126. The redundant braking subsystem connectors (5, 6) are disposed at pressure inlet ports (31, 32) of the first redundant braking pipeline 125 and the second redundant braking pipeline 126, and the braking system is shown in FIG. 2. Alternatively, the redundant braking subsystem 120 may further include only redundant braking subsystem connectors (5, 6), and the braking system is shown in FIG. 3. In other words, the redundant braking subsystem 120 may be integrated with the main braking subsystem into one system to provide braking force for a vehicle, or may be separately disposed to provide braking force for a vehicle, or may be connected and adapted to different main braking subsystems by using the connectors (1, 2, 3, 4, 5, 6), to provide braking force for a vehicle.

According to the braking system in this application, after the main braking subsystem fail, braking performance of the braking system can be maintained by the redundant braking subsystem 120. The redundant braking subsystem 120 is simple in structure, is easy to control, and has low costs.

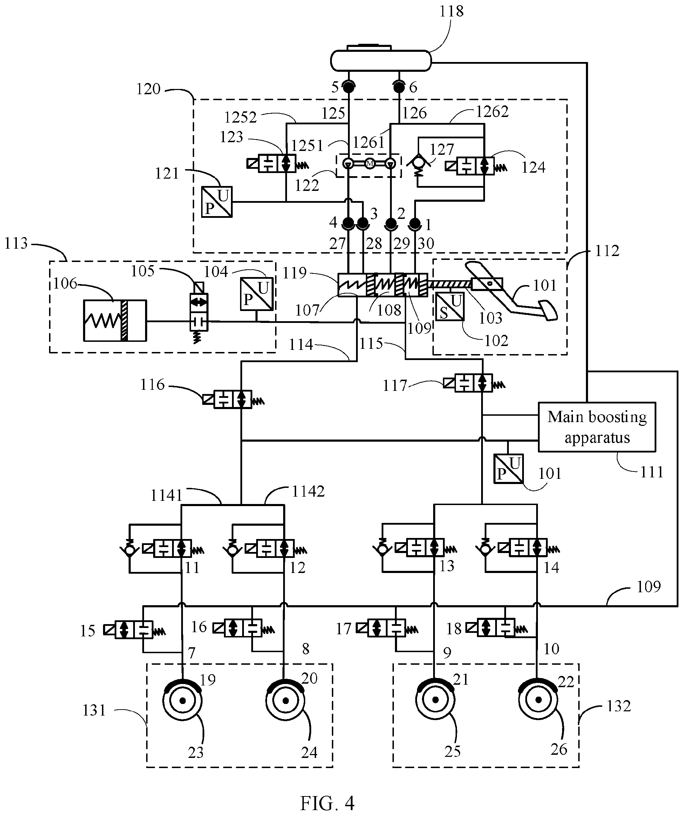

It should be understood that the redundant braking subsystem 120 in this application may adapt to a plurality of forms of main braking subsystems. For example, in the main braking subsystem, the brake master cylinder 119 is a serial double-cavity brake master cylinder. The brake master cylinder 119 may alternatively be of another form, for example, a brake master cylinder in a decoupled design. As shown in the brake master cylinder 119 in FIG. 4, the brake master cylinder 119 in a decoupled design includes a first cavity 107, a second cavity 108, and a third cavity 109. When the brake master cylinder 119 in the main braking subsystem is the brake master cylinder in a decoupled design, the pressure outlet ports of the first branch 1261 and the second branch 1262 that are of the second redundant braking pipeline 126 may be respectively connected to the second cavity 108 and the third cavity 109 that are of the brake master cylinder 119. The braking system 100 is shown in FIG. 4.

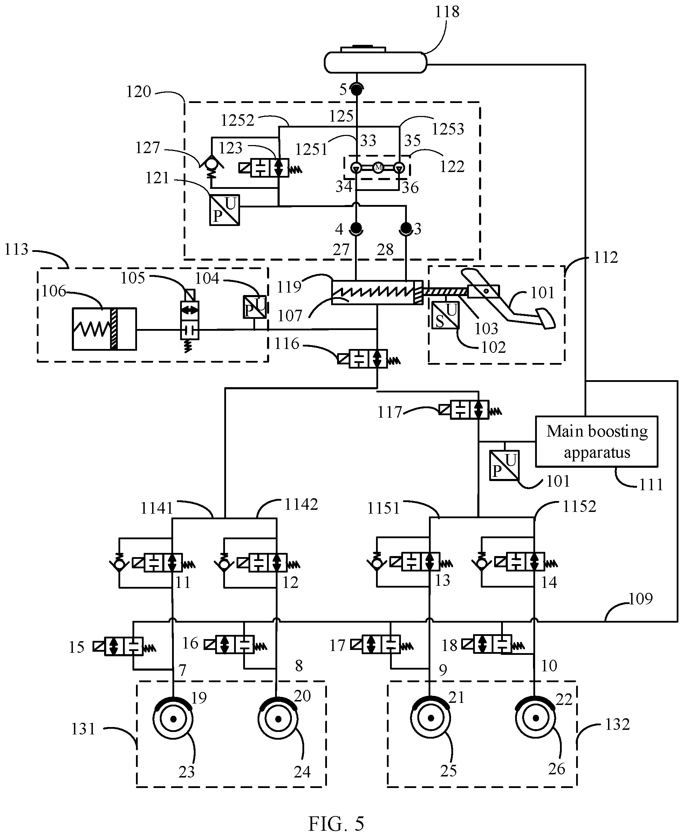

For another example, in the main braking subsystem, the brake master cylinder 119 may alternatively be a single-cavity brake master cylinder, as shown in the brake master cylinder 119 in FIG. 5. In this case, it may be understood that pressure inlet ports of a first braking pipeline 114 and a second braking pipeline 115 are combined, or, the main braking subsystem includes only the first braking pipeline 114. The first braking pipeline 114 includes four branches (1141, 1142, 1151, 1152), pressure outlet ports of the four branches are (7, 8, 9, 10), and the pressure outlet ports (7, 8, 9, 10) of the four branches are respectively connected to pressure inlet ports (19, 20) of brake wheel cylinders of a first group of wheels and pressure inlet ports (21, 22) of brake wheel cylinders of a second group of wheels. The braking system 100 is shown in FIG. 5. The redundant braking subsystem 120 may include a first pressure sensor 121, a redundant boosting apparatus 122, a third isolation valve 123, a first redundant braking pipeline 125, and a first one-way valve 127.

The first one-way valve 127 is connected in parallel to two ends (a pressure outlet port and a pressure inlet port) of the third isolation valve 123. The first redundant braking pipeline 125 may further include a third branch 1253. The third branch 1253 connects a fluid reservoir apparatus 118 and a brake master cylinder 119 by using a second hydraulic pump of the redundant boosting apparatus 122. One end of the third branch 1253 is connected between a first hydraulic pump of the redundant boosting apparatus 122 and the fluid reservoir apparatus 118, and another end of the third branch 1253 is connected between the second hydraulic pump of the redundant boosting apparatus 122 and the brake master cylinder 119. A motor of the redundant boosting apparatus 122 works to drive the first hydraulic pump and the second hydraulic pump, and presses a brake fluid into the brake master cylinder 119 through the three branches of the first redundant braking pipeline 125. Pressure of a brake fluid that is in a third braking pipeline is increased, to increase braking force applied to each brake wheel cylinder.

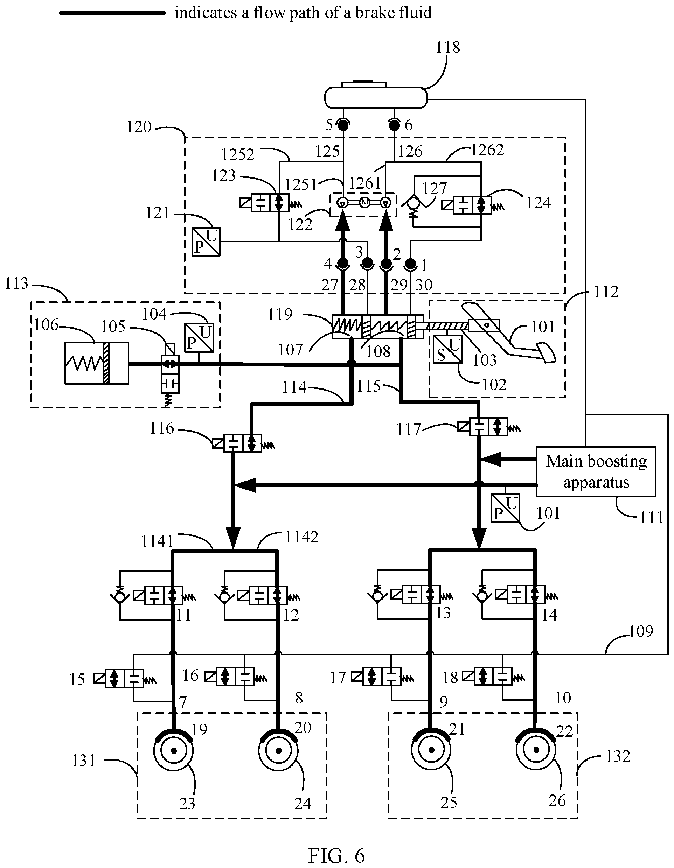

The foregoing describes connection manners between braking elements in the braking system 100 with reference to FIG. 1 to FIG. 5, and the following describes a plurality of braking modes of the braking system 100 with reference to FIG. 6 to FIG. 10. It should be noted that priorities of the plurality of braking modes are not specifically limited in this application.

The braking system 100 may include three braking modes: a mechanical braking mode, a brake-by-wire mode, and an active braking mode. The mechanical braking mode may be understood as that a brake master cylinder 119 provides braking force for four brake wheel cylinders (23, 24, 25, 26) via a first braking pipeline 114 and a second braking pipeline 115. In this case, only a main braking subsystem 110 may provide braking force for wheels. The brake-by-wire mode may be understood as that a controller (a redundant controller or a main controller) controls, based on stepping of a driver on a brake pedal 101, a main boosting apparatus 111 or a redundant boosting apparatus 122 to provide braking force for wheels. The active braking mode may be understood as that a controller (a redundant controller or a main controller) controls a main boosting apparatus 111 or a redundant boosting apparatus 122 to provide braking force for wheels. A difference between the active braking mode and the brake-by-wire mode lies in that, in the active braking mode, a driver may not need to operate the brake pedal 101. The active braking mode may be applied to a situation such as adaptive cruise control or obstacle avoidance controlled by an advanced driving assistant system (advanced driving assistant system).

It should be understood that implementations of some functions in the foregoing different braking modes may be the same. For example, calculation solutions for required pedal braking force used in different modes may be the same. The different braking modes in the braking system 100 are described in detail below.

Assuming that in the braking system 100, a first isolation valve 116 and a second isolation valve 117 are normally open valves, inlet valves (11, 12, 13, 13) are normally open valves, outlet valves (15, 16, 17, 18) are normally closed valves, a third isolation valve 123 and a fourth isolation valve 124 are normally open valves, and a control valve 105 is a normally closed valve.

It should be noted that a normally open state may be understood as that the isolation valve or the control valve is in an on state, and a normally closed state is that the isolation valve or the control valve is in an off state. In addition, the foregoing normally open state and normally closed state are default states of the isolation valve or the control valve when no power is supplied to the isolation valve or the control valve. When the state of the isolation valve or the control valve needs to be adjusted, power may be supplied to an isolation valve or a control valve whose state is to be adjusted, to control the isolation valve or the control valve to be in the off state or the on state.

### (1) Brake-by-wire mode

The brake-by-wire mode may include a main boosting brake-by-wire mode and a redundant boosting brake-by-wire mode.

In the main boosting brake-by-wire mode, a main controller controls the first isolation valve 116 and the second isolation valve 117 to be in the off state, and the control valve 105 to be in the on state, so that a pedal feel simulator 106 communicates with a second braking pipeline 115, and another control valve in the braking system 100 maintains the foregoing default state.

In this way, a driver steps on a brake pedal 101, so that a piston of a brake master cylinder 119 is displaced relative to a brake master cylinder 119, and a brake fluid in the brake master cylinder 119 is pressed into the second braking pipeline 115 and a first braking pipeline 114. Brake fluids in the two braking pipelines are blocked at the first isolation valve 116 and the second isolation valve 117 of the isolation valves. The brake fluid in the second braking pipeline 115 is pressed into the pedal feel simulator 106 by using the control valve 105. The pressure sensor 104 measures pressure of the brake fluid that is in the second braking pipeline 115, determines braking force required by the driver, and then feeds back the braking force to a main boosting apparatus 111. The main boosting apparatus 111 provides braking force for brake wheel cylinders (23, 24, 25, 26) based on the required braking force. For a flow path of a brake fluid in the braking system, refer to FIG. 6.

It should be noted that neither of the foregoing two solutions for pedal feel simulation directly affects implementation of dynamics functions such as an antilock brake system (antilock brake system, ABS), a traction control system (traction control system, TCS), and an electronic stability system (electronic stability system, ESC). To implement dynamics control algorithms such as TCS, ABS, and ESC, a single brake wheel cylinder needs to be controlled. In this case, under the assistance of the main boosting apparatus 111, operations of pressure boosting, maintaining, and reducing of the single brake wheel cylinder may be implemented by controlling a single inlet valve and a single outlet valve.

After the driver releases the brake pedal 101, the piston of the brake master cylinder 119 returns to an initial location under an action of a return spring. A brake fluid in the pedal feel simulator 106 flows back to a second cavity 108 in a reverse direction from the control valve 105, and finally flows into a fluid reservoir apparatus 118. A hydraulic cylinder in the main boosting apparatus 111 works reversely, so that pressure in the brake wheel cylinders (23, 24, 25, 26) is greater than pressure in the hydraulic cylinder in the main boosting apparatus 111, and the brake fluid returns to the hydraulic cylinder of the main boosting apparatus 111 along braking pipelines from the brake wheel cylinders (23, 24, 25, 26) through respective corresponding inlet valves (11, 12, 13, 13) and one-way valves respectively.

Optionally, the first isolation valve 116 and the second isolation valve 117 may be further controlled to be in an on state, so that the brake fluid returns to the fluid reservoir apparatus 118 from the brake wheel cylinders (23, 24, 25, 26) through the first isolation valve 116, the second isolation valve 117, a second cavity 222, and a first cavity 212. Alternatively, when quick pressure reducing is required, the outlet valves (15, 16, 17, 18) may be further controlled to be turned on, so that the brake fluid in the brake wheel cylinders (23, 24, 25, 26) flows back to the fluid reservoir apparatus 118.

When the main boosting brake-by-wire mode fails, the braking system can work in the redundant boosting brake-by-wire mode. It should be understood that failure of the main boosting brake-by-wire mode includes but is not limited to a fault of the main boosting apparatus 111.

Another control valve in the braking system 100 maintains the above default state in the redundant boosting brake-by-wire mode.

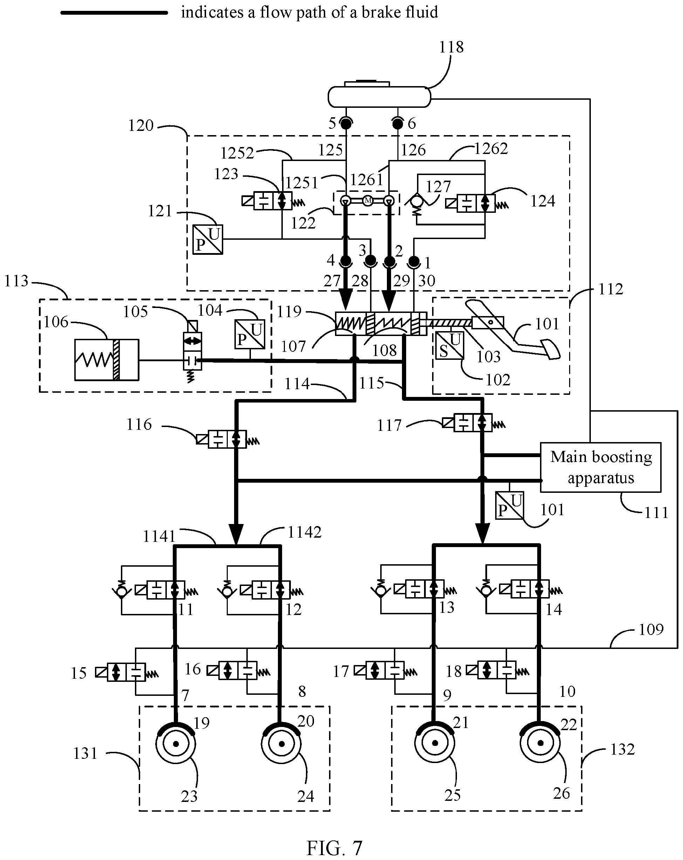

In this way, the driver steps on the brake pedal 101, and pushes, by using a push rod 103, the piston of the brake master cylinder 119 to perform displacement relative to the brake master cylinder 119, so that the brake fluid in the brake master cylinder 119 is pressed into the second braking pipeline 115 and the first braking pipeline 114. The redundant controller measures pedal displacement based on a pedal displacement sensor 102, determines required braking force of the driver, and feeds back the required braking force to the redundant boosting apparatus 122. The redundant boosting apparatus 122 drives the motor based on the required braking force, and compresses the brake fluid by using a first hydraulic pump and a second hydraulic pump, so that the brake fluid provides braking force for the brake wheel cylinders (23, 24, 25, 26) by using the first braking pipeline 114 and the second braking pipeline 115. For a flow path of a brake fluid, refer to FIG. 7.

When the driver releases the brake pedal 101, the piston of the brake master cylinder 119 returns to the initial location under the action of the return spring, the brake fluid returns to the brake master cylinder 118 from the brake wheel cylinders (23, 24, 25, 26) through the first isolation valve 116 and the second isolation valve 117. The first hydraulic pump and the second hydraulic pump of the redundant boosting apparatus 122 work reversely, so that the brake fluid flows back to the fluid reservoir apparatus 118. Alternatively, when quick pressure reducing is required, the outlet valves (15, 16, 17, 18) may be further turned on, so that the brake fluid in the brake wheel cylinders (23, 24, 25, 26) flows back to the fluid reservoir apparatus 118.

### (2) Active braking mode

The active braking mode may include a main boosting active braking mode and a redundant boosting active braking mode.

In the main boosting active braking mode, a main controller determines, by analyzing information such as an environment condition, a vehicle status, an ADAS status, and a driver input, that a vehicle needs to perform the active braking mode and determines required braking force. In this case, the main controller controls a first isolation valve 116 and a second isolation valve 117 to be in an on state, and another control valve in the braking system 100 keep the foregoing default state.

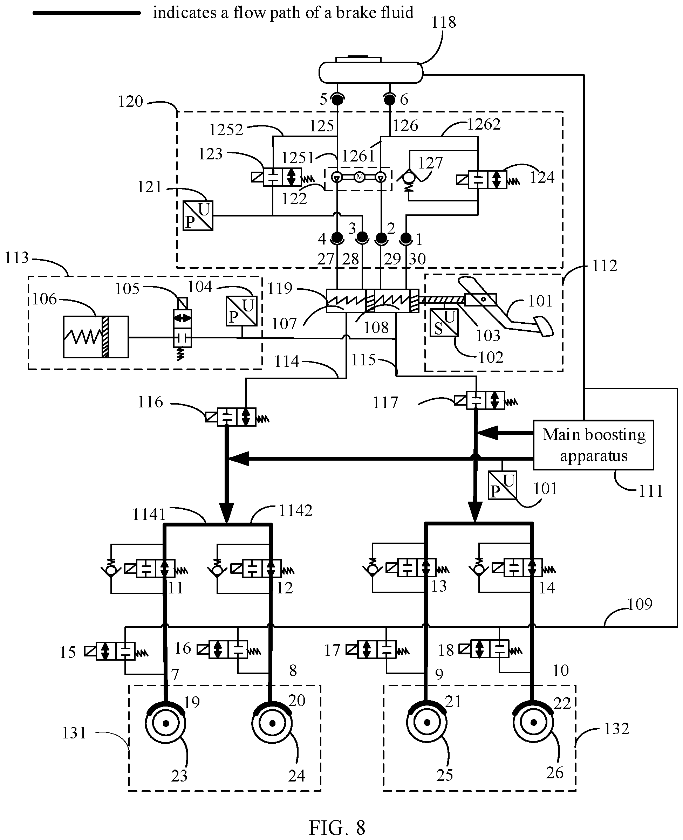

The main controller sends the required braking force to a main boosting apparatus 111, and the main boosting apparatus 111 provides braking pressure for brake wheel cylinders (23, 24, 25, 26) based on the braking force. In the main boosting active braking mode, a flow path of a brake fluid in the braking system 100 is shown in FIG. 8.

When the pressure needs to be reduced, a hydraulic cylinder of the main boosting apparatus 111 works reversely under action of a motor, so that the brake fluid returns to the hydraulic cylinder of the main boosting apparatus 111 along braking pipelines from the brake wheel cylinders (23, 24, 25, 26) through respective inlet valves (11, 12, 13, 13) and one-way valves respectively. Optionally, when quick pressure reducing is required, outlet valves (15, 16, 17, 18) may be further turned on, so that the brake fluid in the brake wheel cylinders (23, 24, 25, 26) flows back to the fluid reservoir apparatus 118.

When the main boosting active braking mode fails, the braking system works in the redundant boosting active braking mode. It should be understood that failure of the main boosting active braking mode includes but is not limited to a fault of the main boosting apparatus 111.

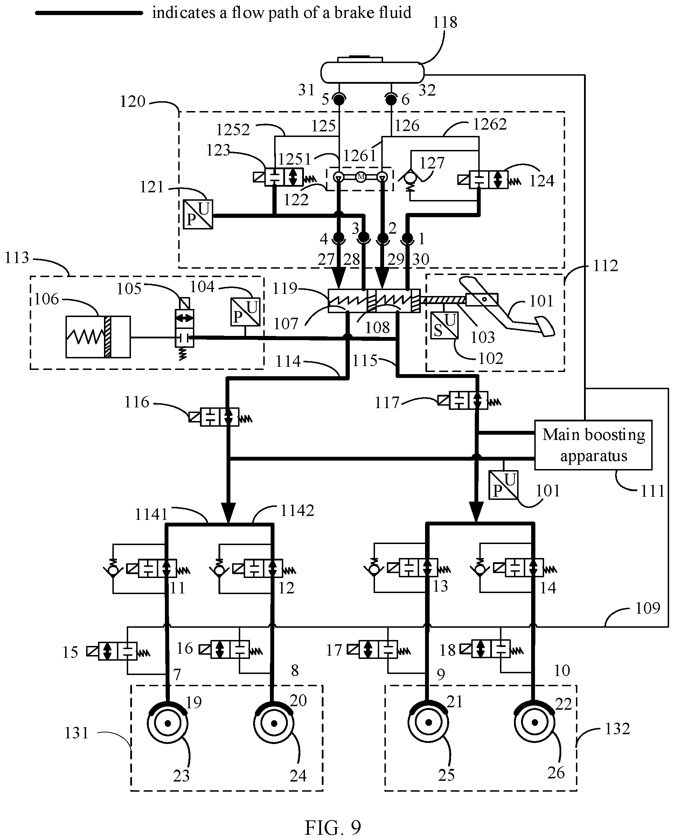

In the redundant boosting active braking mode, a redundant controller controls a third isolation valve 123 and a fourth isolation valve 124 to be in an off state, and another control valve keep the foregoing default state. The redundant controller sends required braking force to a redundant boosting apparatus 122. The redundant boosting apparatus 122 drives the motor based on the required braking force, and compresses the brake fluid by using a first hydraulic pump and a second hydraulic pump, so that the brake fluid provides braking force for the brake wheel cylinders (23, 24, 25, 26) by using a brake master cylinder 119, a first braking pipeline 114, and a second braking pipeline 115. Determining of the required braking force is similar to determining of the required braking force in the main boosting active braking mode, and is not described again for brevity. In the redundant boosting active braking mode, a flow path of a brake fluid in the braking system 100 is shown in FIG. 9.

When the pressure needs to be reduced, the hydraulic pump of the redundant boosting apparatus 122 works reversely under the action of the motor, so that the brake fluid returns to the fluid reservoir apparatus 118. Optionally, when quick pressure reducing is required, outlet valves (15, 16, 17, 18) may be further turned on, so that the brake fluid in the brake wheel cylinders (23, 24, 25, 26) flows back to the fluid reservoir apparatus 118.

### (3) Mechanical braking mode

In the mechanical braking mode, all isolation valves or control valves in the braking system 100 are in a default state. A driver steps on a brake pedal 101, pushes a brake fluid in a second cavity 108 into a second braking pipeline 115, and pushes a brake fluid in a first cavity 107 into a first braking pipeline 114, and the brake fluid flows into brake wheel cylinders (23, 24, 25, 26) by using inlet valves (11, 12, 13, 13), to implement manual braking.

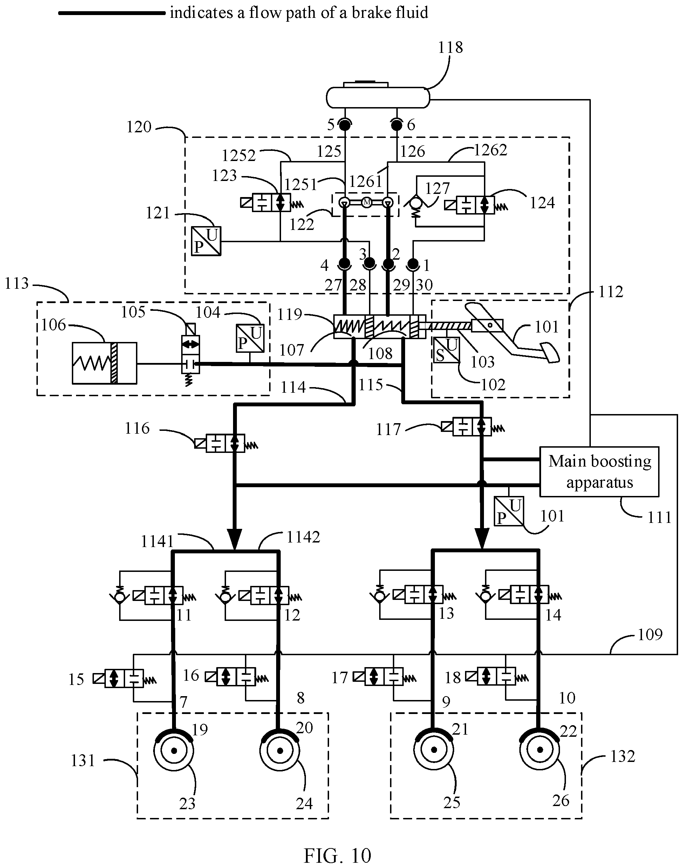

When the driver releases the brake pedal 101, a piston of a brake master cylinder 119 returns to an initial location under action of a return spring, and the brake pedal 101 returns to an initial location by using a push rod. In this case, the brake fluid flows back to the second cavity 108 and the first cavity 107 in a reverse direction from the brake wheel cylinders (23, 24, 25, 26) through the inlet valves (11, 12, 13, 13) and one-way valves, and finally flows into a fluid reservoir apparatus 118. For a flow path of a brake fluid in the mechanical braking mode, refer to FIG. 10.

It should be understood that the mechanical braking mode can ensure reliable braking of a vehicle when both the brake-by-wire mode and the active braking mode fail.

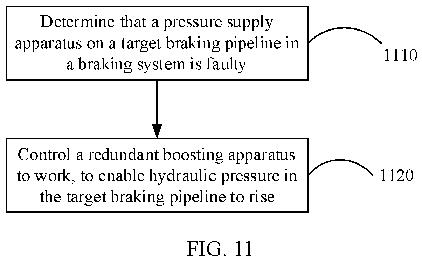

The foregoing describes the braking system 100 and a plurality of braking modes of the braking system 100. The following describes, with reference to FIG. 11, a control method based on the foregoing braking system provided in an embodiment of this application. The method may be performed by a redundant controller, and the method may include the following several steps. For brevity, either of the foregoing first braking pipeline 114 and second braking pipeline 115 is referred to as a "target braking pipeline".

Optionally, the method may include S1110: Determine that a pressure supply apparatus on the target braking pipeline in the braking system is faulty.

It should be understood that the braking system 100 may be any one of the braking systems 100 shown in FIG. 1 to FIG. 5, and the pressure supply apparatus may include a main boosting apparatus 111. That the pressure supply apparatus on the target braking pipeline in the braking system 100 is faulty and fails may be determined by the redundant controller, or may be determined by the redundant controller by using another unit. For example, the redundant controller determines that the pressure supply apparatus on the target braking pipeline in the braking system 100 is faulty and fails by using a main controller or another component in the braking system, for example, a detection valve in the braking system.

S1120: Control a redundant boosting apparatus 122 to work, to enable hydraulic pressure in the target braking pipeline to rise.

Optionally, before it is determined that the redundant boosting apparatus 122 is controlled to work, the method may further include: determining a working mode of the braking system 100. If the braking system 100 works in the active braking mode, the method further includes: controlling, by the redundant controller, a third isolation valve 123 and a fourth isolation valve 124 to be in an off state. The third isolation valve 123 and the fourth isolation valve 124 are controlled to be in the off state, so that a brake fluid in a brake master cylinder 119 can be prevented from flowing back to a fluid reservoir apparatus 118 in a braking process.

In a possible implementation, controlling the redundant boosting apparatus 122 to work includes: controlling the redundant boosting apparatus 122 to drive a motor based on required braking force, and compressing the brake fluid by using a first hydraulic pump and a second hydraulic pump, to enable the brake fluid provides braking force for brake wheel cylinders (23, 24, 25, 26) by using a first braking pipeline 114 and a second braking pipeline 115.

In this embodiment of this application, the redundant controller controls the redundant boosting apparatus to work, so that the hydraulic pressure in the target braking pipeline rises. Pressure of the brake fluid provides braking force for the brake wheel cylinders, which is conducive to improving redundancy performance of the braking system.

The controller or the redundant controller in this embodiment of this application may be an independent controller or a same controller. The controller may be a whole vehicle domain controller or an intelligent driving domain controller. A form of the controller is not limited in this application.

The braking system 100 provided in this application may be applied to a vehicle. The vehicle includes a first group of wheels 131, a second group of wheels 132, and any one of the braking systems 100 described above. For brevity, the braking system 100 is not described in detail.

It should be noted that the "inlet valve" and the "outlet valve" in this application are distinguished only based on functions of the control valve in the braking system. A control valve configured to control connection or disconnection of an inlet pipeline may be referred to as an "inlet valve" or a "pressure boosting valve". A controller configured to control connection or disconnection of a return pipeline may be referred to as an "outlet valve" or a "pressure reducing valve". A control valve configured to isolate a two-stage braking subsystem may be referred to as an "isolation valve". The foregoing control valve may be a valve commonly used in an existing braking system, for example, a solenoid valve, which is not specifically limited in this embodiment of this application.

In addition, after the control valve is connected to the braking pipeline, a connection port between the control valve and the braking pipeline may be indicated by a first end and a second end, and a flow direction of a brake fluid between the first end and the second end is not limited in this application. For example, the brake fluid may flow from the first end of the control valve to the second end of the control valve when the control valve is in an on state, or the brake fluid may flow from the second end of the control valve to the first end of the control valve when the control valve is in an off state.

In addition, the "first braking pipeline 114", "second braking pipeline 115", "first redundant braking pipeline 125", "second redundant braking pipeline 126", another braking pipeline, and the like in this application may be understood as one or more braking pipelines for implementing a function. For example, the first braking pipeline 114 may include a plurality of braking pipelines for connecting the first cavity 107 of the brake master cylinder 119 and the first isolation valve 116.

In addition, in this application, when architectures such as a braking system and a vehicle are described with reference to the accompanying drawings, the accompanying drawings schematically show two working states (an off state or an on state) that may be implemented by each control valve, and a current working state of the control valve is not limited to those shown in the figures.

In addition, when architectures such as the braking units and the braking systems are described in this application with reference to the accompanying drawings, components with a same function in the accompanying drawings corresponding to embodiments use a same number. For brevity, functions of the components are not described in each embodiment. For details, refer to descriptions of functions of the components in this specification.

In addition, the hydraulic adjustment unit in this application may be a unit configured to adjust brake fluid pressure in the braking system, and includes one or more braking pipelines described above, and elements such as a control valve and a one-way valve in the braking pipeline. Optionally, the foregoing hydraulic adjustment unit may further include elements such as a hydraulic cylinder, a piston, and a push rod in a hydraulic adjustment apparatus. After the foregoing hydraulic adjustment unit is installed in the braking system, the braking system may further include one or more elements of a brake wheel cylinder, a fluid reservoir apparatus, and a brake pedal.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the division of units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual needs to implement the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially or parts contributing to the prior art or some of the technical solutions may be embodied in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A braking system, comprising a main braking subsystem (110) and a redundant braking subsystem (120), wherein the main braking subsystem (110) comprises a brake master cylinder (119); and
the redundant braking subsystem (120) comprises a redundant boosting apparatus (122) and a third isolation valve (123), wherein
the redundant boosting apparatus (122) comprises a first input end (33) and a first output end (34), the first input end (33) is configured to input a brake fluid, the first output end (34) of the redundant boosting apparatus (122) is hydraulically connected to the brake master cylinder (119), one end of the third isolation valve (123) is hydraulically connected to the first input end (33) of the redundant boosting apparatus (122), and another end of the third isolation valve (123) is hydraulically connected to the brake master cylinder (119).

2. The braking system according to claim 1, wherein the redundant boosting apparatus (122) further comprises:
a second input end (35) and a second output end (36), wherein the second input end (35) is hydraulically connected to one end of a fourth isolation valve (124), another end of the fourth isolation valve (124) is hydraulically connected to the brake master cylinder (119), and the second output end is hydraulically connected to the brake master cylinder (119).

3. The braking system according to claim 1, wherein the redundant boosting apparatus (122) further comprises:
a second input end (35) and a second output end (36), wherein the second input end (35) is hydraulically connected to the first input end (33), and the second output end (36) is hydraulically connected to the first output end (34).

4. The braking system according to any one of claims 1 to 3, wherein the main braking subsystem further comprises a fluid reservoir apparatus (118), the fluid reservoir apparatus (118) is connected to an input end of the redundant boosting apparatus (122), and the input end of the redundant boosting apparatus (122) comprises at least one of the first input end (33) and the second input end (35).

5. The braking system according to any one of claims 1 to 4, wherein the redundant braking subsystem (120) further comprises:
a first pressure sensor (121), wherein the first pressure sensor (121) is connected to a pipeline that is between the third isolation valve (123) and the brake master cylinder (119), and the first pressure sensor (121) is configured to sense pressure of a brake fluid that is in the brake master cylinder (119).

6. The braking system according to any one of claims 2 to 5, wherein the redundant braking subsystem (120) further comprises:
a first one-way valve (127), wherein the first one-way valve (127) and the fourth isolation valve (124) are connected in parallel; or
the first one-way valve (127) and the third isolation valve (123) are connected in parallel.

7. The braking system according to any one of claims 1 to 6, wherein the redundant boosting apparatus (122) is a plunger pump assembly, the plunger pump assembly comprises a first hydraulic pump and a second hydraulic pump, an input end of the first hydraulic pump is the first input end (33), an output end of the first hydraulic pump is the first output end (34), an input end of the second hydraulic pump is the second input end (35), and an output end of the second hydraulic pump is the second output end (36).

8. The braking system according to any one of claims 1 to 7, wherein the redundant braking subsystem (120) further comprises:
a first connector (1, 2, 3, 4), wherein the first connector (1, 2, 3, 4) is configured to be connected to the brake master cylinder (119).

9. The braking system according to any one of claims 1 to 8, wherein the redundant braking subsystem (120) further comprises:
a second connector (5, 6), wherein the second connector (5, 6) is configured to connect the redundant braking subsystem (120) and the fluid reservoir apparatus (118).

10. The braking system according to any one of claims 1 to 9, wherein the main braking subsystem further comprises a main boosting apparatus (111), a first isolation valve (116), a second isolation valve (117), a target braking pipeline (114, 115), at least one inlet valve (11, 12, 13, 14), and at least one outlet valve (15, 16, 17, 18), wherein
the first isolation valve (116) and the second isolation valve (117) are configured to block a brake fluid that is in the target braking pipeline (114, 115); and
the main boosting apparatus (111) is configured to: increase pressure of the brake fluid that is in the target braking pipeline (114, 115), and provide braking force for at least one brake wheel cylinder (23, 24, 25, 26) by using the at least one inlet valve (11, 12, 13, 14), or
reduce braking force that is in at least one brake wheel cylinder (23, 24, 25, 26) by using the at least one outlet valve (15, 16, 17, 18).

11. The braking system according to any one of claims 1 to 10, wherein the main braking subsystem further comprises a pedal feel simulation system (113), the pedal feel simulation system (113) is configured to collect required braking force, and the pedal feel simulation system (113) comprises a pedal feel simulator (106), a control valve (105), and a second pressure sensor (104), wherein
the pedal feel simulator (106) is connected to the target braking pipeline (115), the control valve (105) is disposed on a pipeline that is between a pressure inlet port of the pedal feel simulator (106) and the target braking pipeline (115), and the control valve (105) is configured to control connection and disconnection of the pedal feel simulator (106); and
the second pressure sensor (104) is connected to the pipeline that is between the pressure inlet port of the pedal feel simulator (106) and the target braking pipeline (115), and the second pressure sensor (104) is configured to sense the pressure of the brake fluid that is in the brake master cylinder (119).

12. A hydraulic apparatus, comprising a redundant boosting apparatus (122), a third isolation valve (123), and a first connection interface (1, 2, 3, 4), wherein
the redundant boosting apparatus (122) comprises a first input end (33) and a first output end (34), the first input end (33) is configured to input a brake fluid, the first output end (34) is hydraulically connected to a first interface that is in the first connection interface (1, 2, 3, 4), and the first interface is at least one of the first connection interfaces (1, 2, 3, 4);
one end of the third isolation valve (123) is hydraulically connected to the first input end (33) of the redundant boosting apparatus (122), and another end of the third isolation valve (123) is hydraulically connected to a second interface that is in the first connection interface (1, 2, 3, 4); and
the first connection interface (1, 2, 3, 4) is configured to hydraulically connect the hydraulic apparatus and a brake master cylinder.

13. The hydraulic apparatus according to claim 12, wherein the hydraulic apparatus further comprises:
a second input end (35) and a second output end (36), wherein the second output end of the redundant boosting apparatus (122) is hydraulically connected to a third interface that is in the first connection interface (1, 2, 3, 4), and the third interface is at least one of the connectors (1, 2, 3, 4); and
a fourth isolation valve (124), wherein one end of the fourth isolation valve (124) is hydraulically connected to the second input end (35) of the redundant boosting apparatus (122), and another end of the fourth isolation valve (124) is hydraulically connected to a fourth interface that is in the first connection interface (1, 2, 3, 4).

14. The hydraulic apparatus according to claim 12, wherein the hydraulic apparatus further comprises:
a second input end (35) and a second output end (36), wherein the second input end (35) of the redundant boosting apparatus (122) is hydraulically connected to the first input end (33), and the second output end (36) is hydraulically connected to the first output end (34).

15. The hydraulic apparatus according to any one of claims 12 to 14, wherein the hydraulic apparatus further comprises:
a fluid reservoir apparatus (118), wherein the fluid reservoir apparatus (118) is connected to an input end of the redundant boosting apparatus (122), and the input end of the redundant boosting apparatus (122) comprises at least one of the first input end (33) and the second input end (35).

16. The hydraulic apparatus according to any one of claims 12 to 14, wherein the hydraulic apparatus further comprises:
a second connection interface (5, 6), wherein the second connection interface (5, 6) is configured to connect an input end of the redundant boosting apparatus (122) and a fluid reservoir apparatus (118), and the input end of the redundant boosting apparatus (122) comprises at least one of the first input end (33) and the second input end (35).

17. The hydraulic apparatus according to any one of claims 12 to 16, wherein the hydraulic apparatus further comprises:
a first pressure sensor (121), wherein the first pressure sensor (121) is connected to a pipeline that is between the third isolation valve (123) and the second interface, and the first pressure sensor (121) is configured to sense pressure of a brake fluid that is in the brake master cylinder (119).

18. The hydraulic apparatus according to any one of claims 13 to 17, wherein the hydraulic apparatus further comprises:
a first one-way valve (127), wherein the first one-way valve (127) and the fourth isolation valve (124) are connected in parallel; or
the first one-way valve (127) and the third isolation valve (123) are connected in parallel.

19. The hydraulic apparatus according to any one of claims 12 to 18, wherein the redundant boosting apparatus (122) is a plunger pump assembly, the plunger pump assembly comprises a first hydraulic pump and a second hydraulic pump, an input end of the first hydraulic pump is the first input end (33), an output end of the first hydraulic pump is the first output end (34), an input end of the second hydraulic pump is the second input end (35), and an output end of the second hydraulic pump is the second output end (36).

20. A method for controlling a braking system, wherein the braking system comprises a main braking subsystem (110) and a redundant braking subsystem (120), wherein the main braking subsystem (110) comprises a brake master cylinder (119); and
the redundant braking subsystem (120) comprises a redundant boosting apparatus (122) and a third isolation valve (123), wherein
the redundant boosting apparatus (122) comprises a first input end (33) and a first output end (34), the first input end (33) is configured to input a brake fluid to enable the redundant boosting apparatus (122) to output hydraulic pressure, the first output end (34) of the redundant boosting apparatus (122) is hydraulically connected to the brake master cylinder (119), one end of the third isolation valve (123) is hydraulically connected to the first input end (33) of the redundant boosting apparatus (122), and another end of the third isolation valve (123) is hydraulically connected to the brake master cylinder (119); and
the method comprises:
obtaining a first signal, wherein the first signal indicates fault information of the braking system; and
controlling, based on the first signal, the third isolation valve to be turned off, wherein the redundant boosting apparatus (122) provides hydraulic pressure for a brake wheel cylinder (23, 24, 25, 26) by using the first output end (34).

21. The control method according to claim 20, wherein the redundant boosting apparatus (122) further comprises a second input end (35) and a second output end (36), the second input end (35) is hydraulically connected to one end of a fourth isolation valve (124), another end of the fourth isolation valve (124) is hydraulically connected to the brake master cylinder (119), and the second output end is hydraulically connected to the brake master cylinder (119); and
the method further comprises:
controlling the fourth isolation valve to be turned off, wherein the redundant boosting apparatus (122) provides hydraulic pressure for the brake wheel cylinder (23, 24, 25, 26) by using the first output end (34) and the second output end.

22. The control method according to claim 20 or 21, wherein the method further comprises:
the first signal indicates that a main boosting apparatus is faulty.

23. A computer-readable storage medium, comprising a computer program, wherein when the computer program is run on a computer, the computer is enabled to perform the method according to any one of claims 20 to 22.
